# EUROPEAN PATENT APPLICATION

(11) **EP 3 527 489 A1**
(43) Date of publication of application: **21.08.2019**
(21) Application number: 18382098.4
(22) Date of filing: 20.02.2018
(51) Int. Cl.: B64C 13/40, F16L 9/18, F16L 39/00

(54) **HYDRAULIC SYSTEM FOR AN AIRCRAFT**

(71) Applicant: Airbus Operations, S.L.U., 28906 Getafe (Madrid) (ES)
(72) Inventor: HONORATO RUIZ, Francisco, Javier, 28906 GETAFE (Madrid) (ES); GUINALDO FERNANDEZ, Enrique, 28906 GETAFE (Madrid) (ES); GARCIA NIETO, Carlos, 28906 GETAFE (Madrid) (ES); RODRIGUEZ URBINA, Luis Manuel, 28906 GETAFE (Madrid) (ES); SANCHEZ FRANCO, Diego, 28906 GETAFE (Madrid) (ES)
(74) Representative: Herrero & Asociados, S.L.

(57) **Abstract**

The invention refers to an aircraft an hydraulic system for an aircraft, wherein the hydraulic system comprises: a hydraulic energy generator, at least one actuator, and at least one pressure hydraulic line fluidly communicated with the hydraulic energy generator and with the actuator for applying hydraulic energy to the actuator, and at least one return hydraulic line fluidly communicated with the hydraulic energy generator and with the actuator for the return of the hydraulic energy to the hydraulic energy generator. The hydraulic system further comprises at least one double-walled pipe (1) having an outer pipe (2) and an inner pipe (3) running inside the outer pipe, and wherein the outer pipe is part of the return hydraulic line, and wherein the inner pipe is part of the pressure hydraulic line. The invention reduce the number and routing of the hydraulic lines (piping) of an aircraft.

## Description

### Object of the invention

The present invention refers in general to hydraulic systems for aircrafts, especially applicable to commercial and military transport aircrafts.

An object of the invention is to simplify the installation of an aircraft hydraulic system, in order to reduce: manufacturing and maintenance costs, installation time and aircraft weight.

More specifically, one object of the invention is to group some of the hydraulic lines (pipes) of an aircraft.

### Background of the invention

Some of the main structures responsible for supporting the aerodynamic loads (statically and cycling) of commercial airplanes, are complex systems which are defined in the design stage and in the operating process to ensure continued airworthiness of an aircraft.

Some of the main systems of an aircraft are the followings: flight controls, landing gear, electrical system, bleed system, hydraulics, avionics system, oxygen, fuel, power plant, navigation, communication, ice protection (anti-icing and de-icing), cooling system, instrumentation and recording, fire protection and safety systems.

Furthermore, some of these systems are essential for the safety of the aircraft during a flight (e.g. flight controls), hence it is requested by the airworthiness regulations to duplicate and segregate them, in order to minimize the catastrophic consequences of any system incorrect function. Consequently, the overall manufacturing of each system (including the system devices and routing), together with their respective installation in an aircraft is really a time consuming job due to its complexity, involving a high cost and significant lead time in the overall aircraft production.

Additionally, once the aircraft enters into service, several frequent maintenance tasks are mandatory over most of these systems and sub-systems to secure their well-performance due to their importance in the aircraft. These scheduled maintenance tasks, together with any additional ones occasioned by any malfunction issue, imply a relevant cost for the aircraft operator and might cause delays in the aircraft departure.

As consequence, any improvement which could be implemented in terms of system elements reduction and/or simplification, would have an important benefit not only for the aircraft manufacturers, but also for the aircraft operators which are responsible for the "in-service" life of the airplane.

In particular, the hydraulic system is a critical system of any commercial aircraft, in that, it provides power to actuate some of the most important devices in aircraft operation: spoilers, control surfaces, high lift devices, landing gear, engine reverses, brakes, nose wheel steering, etc. Due to its critical functionality in aircraft operation and for safety reasons, hydraulic systems are normally redundant and their routing is segregated in order to maintain some security clearances between them.

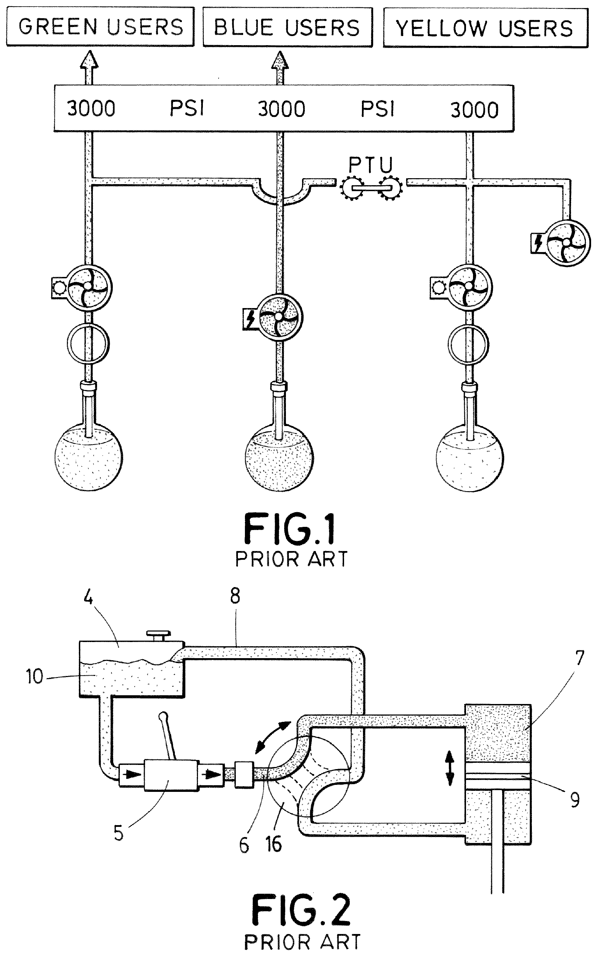

As shown in figure 1, some types of commercial aircrafts have up to three different hydraulic sub-systems installed in the aircraft. Each of them is fully independent from the others. Each hydraulic circuit is designated with a color in order to be identified quickly within the aircraft (Blue, Green and Yellow).

On the other hand, the current trend in aircraft design is to bring power electronics more and more to the center of the aircraft power transmission systems, thus, in some modern designs, the back-up hydraulic circuit (typically Blue circuit) which feeds the aircraft actuation system has been replaced by electro-hydrostatic actuators (autonomous) to move the control surfaces. However, although a *"More Electric Aircraft"* design is being currently followed, hydraulics still remains and will remain for the following years as a crucial system of an aircraft due to its reliability.

The well-known operation principle of a hydraulic system is represented in figure 2, and it is based on the transmission of power (force) by means of a high pressurized fluid, to the different mechanical devices mentioned above, to which that power is applied in the form of mechanical energy by moving a piston (9) coupled with an actuator (7). In order to achieve this goal, a hydraulic fluid (10) is stored in a reservoir (4) and compressed with the use of a pump (5) (of any kind depending on the practical application). This high pressurized fluid flows through pipes in the aircraft, until it reaches the point where it is meant to produce mechanical movement (e.g. the flaps actuators). Once the fluid has achieved its goal, and lost its energy, it flows back to the reservoir (4) where the cycle is restarted.

In summary, a basic hydraulic system comprises the following main components:
1) A hydraulic fluid reservoir (4) communicated with a source of hydraulic energy (5) such as: an engine hydraulic driven pump, electrical driven pumps, hand pumps and/or a Ram Air Turbine, to pressurize the hydraulic fluid from the reservoir (4).
2) An actuator (7) typically a double-acting hydraulic cylinder.
3) Hydraulic lines, including at least one high pressure hydraulic line (6) fluidly communicated with the hydraulic energy generator (5) and with the actuator (7) for applying hydraulic energy to the actuator (7), and at least one return hydraulic line (low pressure) (8) fluidly communicated with the hydraulic energy generator (5) and with the actuator (7) for the return of the hydraulic energy to the hydraulic fluid reservoir (4).

These lines are either rigid pipes or flexible hoses.
4) A selector valve (8) to reciprocately interconnect the pressure and return lines (6,8), for selecting the side of the piston (9) to which hydraulic pressure is applied, to vary the direction of movement of the piston.
5) Power Transfer Units, which assure energy transfer between hydraulic redundant systems in abnormal situations.
6) Ancillary components, such as accumulators, valves, filters and reservoirs.

On the one hand, as mentioned before, both rigid pipes and flexible hoses are used to transfer the fluid. Pipes are typically made out of aluminum, corrosion resistant steel, or titanium. In the case of flexible hoses, there are different configurations of materials (resistant steel, PTFE, etc.), and these are installed when a relative movement exists between two consecutive attaching points of the duct to the aircraft structure.

Furthermore, due to the difference of pressure between the hydraulic line (high pressure) that transmits power to the actuators and the one that returns from the actuators (low pressure), commonly the diameter of the high pressure pipe is smaller than the pipe that returns from the actuator (low pressure line), but sometimes both diameters can be equal.

As one may notice the presence of two different pipes, one for the high pressure line and the return low pressure line, sometimes also entails the use of different supports for each of the pipes, that, consequently increase maintenance and installation tasks.

Typically, in many commercial aircrafts the routing of the hydraulic system is formed by hundreds of meters mostly of rigid pipes, which carry a fluid compressed at around 3000 psi (or even 5000 psi in the case of heavy commercial aircrafts). These hundreds of meters of pipes lead to the installation of thousands of fittings.

Therefore, there is the need in this technical field for simplified hydraulic systems that could lead to major savings both for the airliner and for the aircraft manufacturer.

### Summary of the invention

The present invention is defined in the attached independent claim, and it is based on an optimized design of hydraulic lines (pipes), replacing (at least part of) pressure and return lines, by only one pipe with two concentric pipes, thereby reducing and simplifying the routing.

More in detail, the invention refers to a hydraulic system for an aircraft, wherein the hydraulic system conventionally comprises: a hydraulic energy generator, at least one actuator, and at least one pressure hydraulic line fluidly communicated with the hydraulic energy generator and with the actuator for applying hydraulic energy to the actuator. The system additionally comprises at least one return hydraulic line, fluidly communicated with the hydraulic energy generator and with the actuator for the return of the hydraulic energy to the hydraulic energy generator. The pressure and return lines (either rigid pipes or flexible hoses), are adapted for the flow of a pressurized hydraulic fluid.

The hydraulic system of the invention is characterized in that, at least part of the pressure and return hydraulic lines, are implemented as a double-walled pipe. The double-walled pipe has an outer pipe and an inner pipe running inside the outer pipe. Preferably, the outer pipe is part of the return hydraulic line, and the inner pipe is part of the pressure hydraulic line. Such as the pipe that contains the high pressure fluid, is located inside of the outer pipe containing the low pressure fluid, being this based on pressure loads distribution.

The technical effect of this arrangement, is that, since the return line (outer pipe) is around the pressure line (inner pipe), the difference of pressure between the inside of both pipes, is smaller compared with traditional hydraulic piping in which the pressure line is externally exposed to the atmospheric pressure. Therefore, the thickness of the inner pipe can be reduced, thereby also reducing the weight of the piping of the hydraulic system. Preferably, the thickness of the wall of the inner pipe, is smaller than the thickness of the wall of the outer pipe.

The invention also refers to a joint between consecutive double-walled pipes sections, designed to simplify maintenance operations.

Some of the advantages of the invention are listed below:
- the hydraulic system of the invention reduces the amount of brackets and systems supports, with the corresponding recurrent cost reduction not only by the part manufacturing reduction, but also by the assembly hours required for their installation in the aircraft, as well as maintenance tasks.
- for high rate productions, the reduction of the assembly hours required for hydraulic system installation, and related lead time reduction, involve a non-recurring cost reduction due to the reduced number of assembly jigs required.
- due to the presence of stiffeners inside the double-duct, the amount of brackets needed in the installation can be optimized.
- the invention reduce aircraft weight reduction as the difference of pressure between the outer and inner skin of the inner tube is smaller than in the current layout.

### Brief description of the drawings

Preferred embodiments of the invention are henceforth described with reference to the accompanying drawings, wherein:
Figure 1.- shows an schematic representation of an aircraft hydraulic system redundancy and segregation, according to the prior art.
Figure 2.- shows an schematic representation of a conventional hydraulic system cycle. In broken lines is represented the second position of the selector valve. The arrows indicate that by rotating the selector valve, the direction of movement of the piston is varied.
Figure 3.- shows an example of a double-walled hydraulic pipe according to the invention, wherein drawing (a) is a perspective view and drawing (b) is a front elevational view.
Figure 4.- is a similar representation than figure 3, but showing the separation wall between tubes.
Figure 5.- is a similar representation than figure 3, wherein drawing (a) is a cutaway perspective view of the double-walled hydraulic pipe, and drawing (b) is a front elevational view.
Figure 6.- shows a junction element between sections of the double-walled hydraulic pipe according to the invention, wherein drawing (a) is a side elevational view of a junction between pipe sections; drawing (b) is a longitudinal-sectional view of the junction; drawing (c) is a cross-sectional view of the junction taken on plane A-A in drawing (b); and drawing (d) is a cross-sectional view of the junction taken on plane C-C in drawing (b).

### Preferred embodiment of the invention

The invention is based on a conventional hydraulic system as the one described in relation with figure 2, adapted as a hydraulic system of an aircraft.

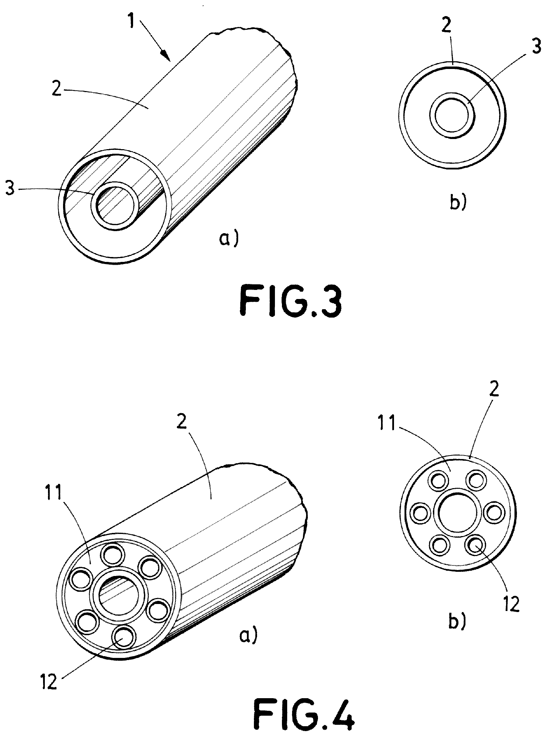

As shown in figure 3 the hydraulic system of the invention, comprises at least one double-walled pipe (1) having an outer pipe (2) and an inner pipe (3) running inside the outer pipe (2), and wherein the outer pipe (2) is part of the return hydraulic line (8), and wherein the inner pipe (3) is part of the pressure hydraulic line (6).

Therefore, at least one return hydraulic line of the hydraulic system passes through the outer pipe (2) of the double-walled pipe (1), and at least one pressure hydraulic line passes through the inner pipe (3).

The doubled-walled pipe (1) contains several stiffening walls (4) (ring-shaped) arranged transversally to the pipe axis in double-walled pipe (1), and placed between the inner pipe (3) and the outer pipe (2), and joined there-in-between as to stiffen the doubled-walled pipe (1), and to support the inner pipe (2). The stiffening walls (4) has some perforations (12) to allow hydraulic fluid circulation, in any direction through the outer pipe (3).

The stiffening walls (4) are regularly distributed at a given distance (e.g. 320-360 mm) in order to assure stability of the double-walled pipe (1) and increase the space between the attachment fittings of the pipe (1) to the aircraft structure.

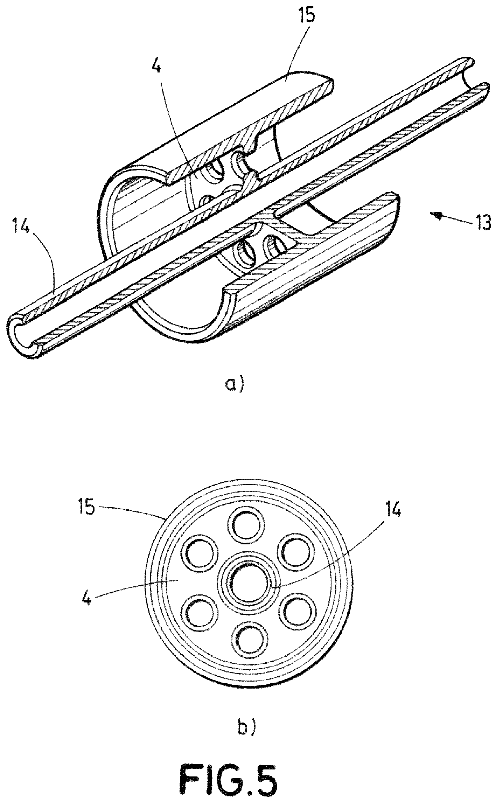

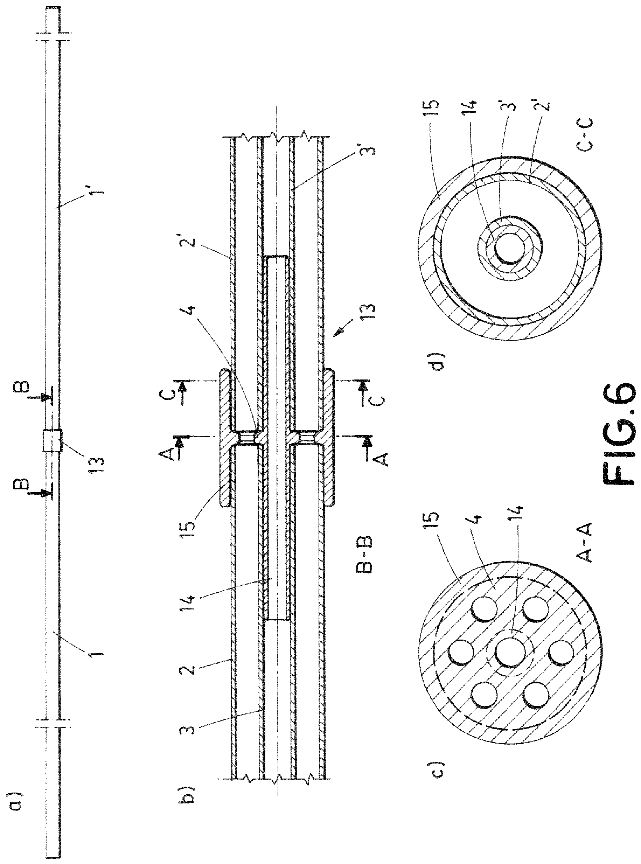

Figures 5 and 6 shows a junction element (13) for joining consecutive doubled-walled pipe sections (1,1"). The junction element (13) comprises: an inner tube (14) adapted to be inserted inside the inner pipes (3,3') of consecutive doubled-walled pipe sections (1,1"). The junction element (13) also has an outer sleeve (15) adapted to be coupled on the outer surface of the outer pipes (2,2'), and a stiffening wall (4) joined to the inner tube (14) and the outer sleeve (15).

As represented in figure 6, the junction between pipe sections (1,1') would be carried out by simply introducing each of the connecting ducts in each side of the junction. The inner tube (14) would fit inside the inner pipes carrying the pressurized fluid by means of an interference fit. At the same time, the outer surface of the return pipe would be fitting in the internal surface the sleeve (15) of the junction, similarly by means of an interference fit.

With respect to the manufacturing process, as a first approach, a traditional method is proposed for the double-walled pipe (1), such as the seamless procedure. The junction element (13) would also be manufactured in the same way. Additionally, when required, the pipes could be bent by traditional methods such as rotary draw bending or the roll bending methods. Then, the stiffening wall (4) would be welded to the double walled pipe. However, for the long term an Additive Layer Manufacturing (ALM) process might appear convenient for the joints, due to the evolution that these manufacturing methods are experiencing in the last decade.

Other preferred embodiments of the present invention are described in the appended dependent claims and the multiple combinations of those claims.

## Claims

1. An hydraulic system for an aircraft, the hydraulic system comprising: a hydraulic energy generator, at least one actuator, and at least one pressure hydraulic line fluidly communicated with the hydraulic energy generator and with the actuator for applying hydraulic energy to the actuator, and at least one return hydraulic line fluidly communicated with the hydraulic energy generator and with the actuator for the return of the hydraulic energy to the hydraulic energy generator, **characterized in that** the hydraulic system further comprises at least one double-walled pipe (1) having an outer pipe (2) and an inner pipe (3) running inside the outer pipe, and wherein the outer pipe is part of the return hydraulic line, and wherein the inner pipe is part of the pressure hydraulic line.

2. An hydraulic system according to claim 1, wherein the doubled-walled pipe (1) has a plurality of stiffening walls (4) transversally arranged in double-walled pipe (1), and placed between the inner pipe (3) and the outer pipe (2), and wherein the stiffening walls (4) have perforations (12) to allow hydraulic fluid circulation.

3. An hydraulic system according to claim 1 or 2, further comprising a junction element (13) for joining consecutive doubled-walled pipe sections (1,1"), the junction element (13) comprising: an inner tube (14) adapted to be inserted inside inner pipes (3,3') of consecutive doubled-walled pipe sections (1,1"), and an outer sleeve (15) adapted to be coupled on the outer surface of the outer pipes (2,2'), and a stiffening wall (4) joined to the inner tube (14) and the outer sleeve (15).
